(19) Europäisches Patentamt
European Patent Office
Office européen des brevets

(11) **EP 0 956 539 B1**

(12) **EUROPÄISCHE PATENTSCHRIFT**

(45) Veröffentlichungstag und Bekanntmachung des Hinweises auf die Patenterteilung:
**18.04.2007 Patentblatt 2007/16**

(21) Anmeldenummer: **98907825.8**

(22) Anmeldetag: **19.01.1998**

(51) Int Cl.:
*G06T 9/00* (2006.01)    *H04N 7/30* (2006.01)

(86) Internationale Anmeldenummer:
**PCT/DE1998/000156**

(87) Internationale Veröffentlichungsnummer:
**WO 1998/034196 (06.08.1998 Gazette 1998/31)**

(54) **VERFAHREN UND ANORDNUNG ZUR CODIERUNG UND DECODIERUNG EINES DIGITALISIERTEN BILDES**

METHOD AND DEVICE FOR CODING AND DECODING A DIGITIZED IMAGE

PROCEDE ET DISPOSITIF DE CODAGE ET DE DECODAGE D'UNE IMAGE NUMERISEE

(84) Benannte Vertragsstaaten:
**DE ES FR GB IT NL SE**

(30) Priorität: **31.01.1997 DE 19703670**

(43) Veröffentlichungstag der Anmeldung:
**17.11.1999 Patentblatt 1999/46**

(73) Patentinhaber: **SIEMENS AKTIENGESELLSCHAFT**
**80333 München (DE)**

(72) Erfinder: **KAUP, Andre**
**D-85635 Höhenkirchen (DE)**

(56) Entgegenhaltungen:
**EP-A- 0 530 022**

- SIKORA T ET AL: "SHAPE-ADAPTIVE DCT FOR GENERIC CODING OF VIDEO" IEEE TRANSACTIONS ON CIRCUITS AND SYSTEMS FOR VIDEO TECHNOLOGY, Bd. 5, Nr. 1, 1.Februar 1995, Seiten 59-62, XP000488410
- RAO K R ET AL: "IMAGE CODING" DISCRETE COSINE TRANSFORM, ALGORITHMS, ADVANTAGES, APPLICATIONS, 1.Januar 1990, RAO K R;YIP P, Seiten 163-207, XP000379255

**Beschreibung**

Die Codierung von Videosignalen entsprechend der Bildcodierungsstandards H.261, H.263, MPEG1 und MPEG2 basiert auf einer blockorientierten diskreten Cosinustransformation (DCT). Diese Verfahren verwenden allgemein das Prinzip der blockbasierten Bildcodierung.

Ein weiterer Ansatz zur Bildcodierung ist das sogenannte Prinzip der objektbasierten Bildcodierung. Bei der objektbasierten Bildcodierung erfolgt eine Segmentierung der Bildvorlagen entsprechend der in der Szene vorkommenden Objekte und eine separate Codierung dieser Objekte.

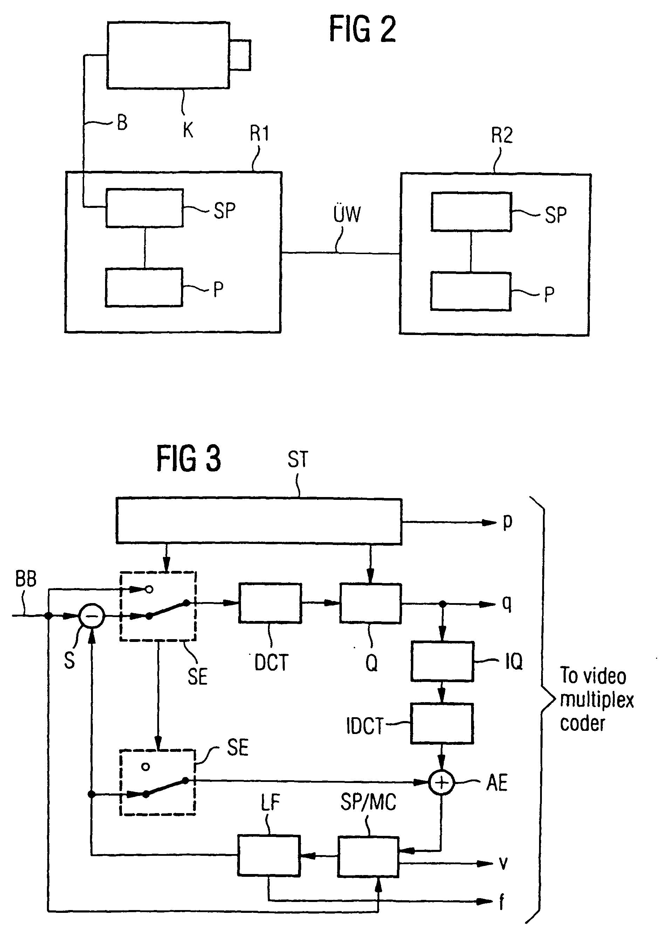

In Fig. 2 ist allgemein eine Anordnung zur Bildcodierung und Bilddecodierung dargestellt.

In Fig. 2 ist eine Kamera K dargestellt, mit der Bilder aufgenommen werden. Die Kamera K kann beispielsweise eine beliebige analoge Kamera K sein, die Bilder einer Szene aufnimmt und die Bilder entweder in der Kamera K digitalisiert oder auch analog zu einem ersten Rechner R1 überträgt, in dem dann entweder die digitalisierten Bilder B verarbeitet werden oder die analogen Bilder zu digitalisierten Bildern B umgewandelt werden und die digitalisierten Bilder B verarbeitet werden.

Die Kamera K kann auch eine digitale Kamera K sein, mit der direkt digitalisierte Bilder B aufgenommen und dem ersten Rechner R1 zur Weiterverarbeitung zugeführt werden.

Der erste Rechner R1 kann auch als eine eigenständige Anordnung ausgestaltet sein, mit der die im weiteren beschriebenen Verfahrensschritte durchgeführt werden, beispielsweise als eine eigenständige Computerkarte, die in einem Rechner installiert ist.

Unter dem ersten Rechner R1 ist allgemein jede Einheit zu verstehen, die eine Bildsignalverarbeitung gemäß dem untern beschriebenen Verfahren durchführen kann, beispielsweise auch ein mobiles Endgerät (Mobiltelefon).

Der erste Rechner R1 weist eine Prozessoreinheit P auf, mit der die im weiteren beschriebenen Verfahrensschritte der Bildcodierung oder der Bilddecodierung durchgeführt werden. Die Prozessoreinheit P ist beispielsweise über einen Bus BU mit einem Speicher SP gekoppelt, in dem die Bilddaten gespeichert werden.

Allgemein können die im weiteren beschriebenen Verfahren sowohl in Software als auch in Hardware oder auch teilweise in Software und teilweise in Hardware realisiert werden.

Nach erfolgter Bildcodierung in dem ersten Rechner R1 und nach Übertragung der komprimierten Bilddaten über ein übertragungsmedium UM zu einem zweiten Rechner R2 wird in dem zweiten Rechner R2 die Bilddecodierung durchgeführt.

Der zweite Rechner R2 kann den gleichen Aufbau haben wie der erste Rechner R1, also den Speicher SP, der über den Bus BU mit der Prozessoreinheit P gekoppelt ist.

In Fig. 3 ist in detaillierterer Form eine mögliche Anordnung in Form eines Prinzipschaltbilds zur Bildcodierung bzw. zur Bilddecodierung dargestellt, die im Rahmen der blockbasierten und zum Teil, wie im weiteren erläutert, im Rahmen der objektbasierten Bildcodierung verwendet werden kann.

Bei blockbasierten Bildcodierungsverfahren wird ein digitalisiertes Bild B in üblicherweise quadratische Blöcke der Größe 8x8 Bildpunkte BP oder 16x16 Bildpunkte BP aufgeteilt und der Anordnung zur Bildcodierung zugeführt.

Einem Bildpunkt ist üblicherweise Codierungsinformation eindeutig zugeordnet, beispielsweise Helligkeitsinformation (Luminanzwerte) oder Farbinformation (Chrominanzwerte).

Bei den blockbasierten Bildcodierungsverfahren wird zwischen verschiedenen Bildcodierungsmodi unterschieden.

Bei dem sog. Intra-Bildcodierungs-Modus wird jeweils das gesamte Bild mit der gesamten, den Bildpunkten des Bildes zugeordneten Codierungsinformation codiert und übertragen (I-Bild).

Bei dem sog. Inter-Bildcodierungs-Modus wird jeweils nur die Differenzbildinformation zweier zeitlich aufeinanderfolgender Bilder codiert und übertragen (P-Bild, B-Bild).

Zum Umschalten zwischen dem Intra-Bildcodierungs-Modus und dem Inter-Bildcodierungs-Modus sind zwei Schaltereinheiten SE vorgesehen. Zur Durchführung des Inter-Bildcodierungs-Modus ist eine Subtraktionseinheit S vorgesehen, in der die Differenz der Bildinformation zweier aufeinanderfolgender Bilder B gebildet wird. Die gesamte Bildcodierung wird über eine Bildcodierungs-Steuereinheit ST gesteuert. Die zu codierenden Bildblöcke BB bzw. Differenzbildblöcke BB werden jeweils einer Transformationscodierungseinheit DCT zugeführt, in der auf die den Bildpunkten zugeordnete Codierungsinformation eine Transformationscodierung, beispielsweise die diskrete Cosinustransformation (DCT) angewendet wird.

Allgemein kann jedoch jede beliebige Transformationscodierung, beispielsweise eine diskrete Sinustransformation oder auch eine diskrete Fouriertransformation durchgeführt werden.

Die durch die Transformationscodierung gebildeten Spektralkoeffizienten werden in einer Quantisierungseinheit Q quantisiert und einen Bildcodierungsmultiplexer (nicht dargestellt) beispielsweise zur Kanalcodierung und/oder zur Entropiecodierung zugeführt. In einer internen Rekonstruktionsschleife werden die quantisierten Spektralkoeffizienten invers quantisiert in einer inversen Quantisierungseinheit IQ und einer inversen Transformationscodierung in einer inversen Transformationscodierungseinheit IDCT unterzogen.

Ferner wird im Fall der Inter-Bildcodierung in einer Addiereinheit AE Bildinformation des jeweiligen zeitlich vorangegangenen Bildes hinzuaddiert. Die auf diese Weise rekonstruierten Bilder werden in einem Bildspeicher SP gespeichert. In dem Bildspeicher SP ist zur einfacheren Darstellung eine Einheit zur Bewegungskompensation MC symbolisch dargestellt.

Ferner ist ein Schleifenfilter (Loopfilter LF) vorgesehen, das mit dem Speicher SP sowie der Subtraktionseinheit S verbunden ist.

Dem Bildcodierungsmultiplexer werden zusätzlich zu den zu übertragenen Bilddaten ein Modusflag p zugeführt, mit dem jeweils angegeben wird, ob eine Intra-/ oder Inter-Bildcodierung vorgenommen wurde.

Ferner werden Quantisierungsindizes q für die Spektralkoeffizienten dem Bildcodierungsmultiplexer zugeführt.

Auch ein Bewegungsvektor v wird jeweils einem Bildblock und/oder einen Makroblock, der beispielsweise 4 Bildblöcke aufweist zugeordnet und dem Bildcodierungsmultiplexer zugeführt.

Ferner ist eine Informationsangabe f zum Aktivieren bzw. Deaktivieren des Schleifenfilters LF vorgesehen.

Nach Übertragung der Bildinformation über das Übertragungsmedium UM kann in dem zweiten Rechner R2 die Decodierung der übertagenen Daten erfolgen. Hierzu ist in dem zweiten Rechner R2 eine Bilddecodiereinheit vorgesehen, die beispielsweise den Aufbau der Rekonstruktionsschleife der in Fig. 2 dargestellten Anordnung aufweist.

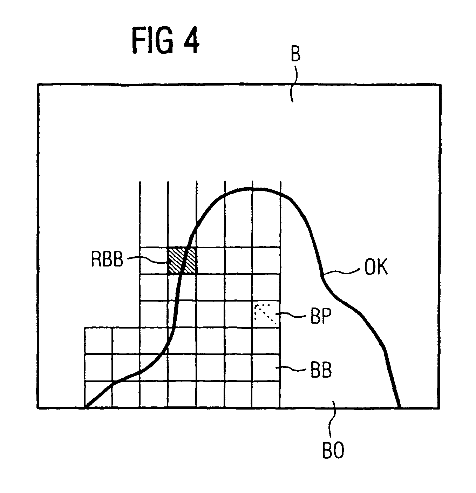

Bei objektbasierten Bildcodierungsverfahren wird jedes Bildobjekt zunächst in Blöcke einer festen Größe, beispielsweise ebenfalls 8x8 Bildpunkte zerlegt. Nach dieser Zerlegung befindet sich ein Teil der resultierenden Bildblöcke vollständig innerhalb eines Bildobjekts BO. Diese Situation ist in Fig. 4 dargestellt. Das Bild B enthält mindestens ein Bildobjekt BO, welches berandet wird mit einer Objektkante OK des Bildobjekts BO. Ferner sind Bildblöcke BB mit 8x8 Bildpunkten BP dargestellt. Bildblöcke BB, die zumindest einen Teil der Objektkante OK enthalten, werden im weiteren als Randbildblöcke RBB bezeichnet.

Bildblöcke BB, die sich nach der Zerlegung vollständig innerhalb des Bildobjekts BO befinden, können in Anlehnung an die oben genannten blockbasierten Bildcodierungsverfahren mit einer gewöhnlichen blockbasierten diskreten Cosinustransformation codiert werden. Die Randbildblöcke RBB sind jedoch teilweise mit Bildinformation gefüllt und müssen mit einem besonderen Verfahren codiert werden.

Für die Codierung der Randbildblöcke RBB existieren bisher zwei grundsätzliche Ansätze.

Aus dem Dokument [1] ist es bekannt, die Bildinformation des Bildobjekts BO innerhalb des Randbildblocks RBB durch ein geeignetes Extrapolationsverfahren der Codierungsinformation auf die Fläche des vollständigen Randbildblocks RBB zu ergänzen. Diese Vorgehensweise wird als Padding bezeichnet. Die ergänzte Fläche wird anschließend mit einer gewöhnlichen 2-dimensionalen Diskreten Cosinus Transformation codiert.

Alternativ dazu ist es aus den Dokumenten [1] und [2] bekannt, daß das gegebene Bildobjekt BO getrennt nach Zeilen und Spalten transformiert wird. Diese Vorgehensweise wird als formangepaßte Transformationscodierung, in dem konkreten Fall der Verwendung einer DCT als formangepaßte DCT bezeichnet. Die zu dem Bildobjekt BO zugeordneten DCT-Koeffizienten werden derart bestimmt, daß diejenigen Bildpunkte BP eines Randbildblocks RBB, die nicht zu dem Bildobjekt BO gehören, ausgeblendet werden. Auf die verbleibenden Bildpunkte BP wird dann zunächst zeilenweise eine Transformation angewendet, deren Länge der Zahl der verbleibenden Bildpunkte in dieser Zeile entspricht. Die resultierenden Koeffizienten werden horizontal ausgerichtet und anschließend einer weiteren eindimensionalen DCT in vertikaler Richtung mit entsprechender Länge unterworfen. Hierbei wird sowohl für die Intra-Bildcodierung als auch für die Inter-Bildcodierung das gleiche Verfahren angewendet.

Aus D3 ist eine zweidimensionale diskrete Cosinus Transformation bekannt, bei der eine Signalenergie bei der Transformation aus einem Ortsbereich in einen Frequenzbereich und zurück erhalten bleiben kann.

Das bekannte Verfahren der formadaptiven Transformationscodierung, welches oben beschrieben wurde, weist v.a. den Nachteil auf, daß nur ein relativ schlechter Kompressionsfaktor der zu komprimierenden Bilddaten bei Prädiktionsfehlerbildern erreicht wird.

Die bekannte Vorschrift zur Codierung von Prädiktionsfehlerbildern bei der formangepaßten Transformationscodierung geht von einer Transformationsmatrix <u>DCT-N</u> mit folgendem Aufbau aus:

$$\underline{DCT - N}(p, k) = \gamma \cdot \cos\left[p \cdot \left(k + \frac{1}{2}\right) \cdot \frac{\pi}{N}\right] \quad k, p = 0 \longrightarrow N-1 \tag{1}.$$

Hierbei ist der Wert $\gamma = \frac{1}{\sqrt{2}}$ für den Fall p=0 und $\gamma$ =1 für alle anderen Fälle.

Mit N wird eine Größe des zu transformierenden Bildvektors bezeichnet, in dem die transformierten Bildpunkte

enthalten sind.

Mit <u>DCT - N</u> wird eine Transformationsmatrix der Größe N x N bezeichnet:

Mit p, k werden Indizes bezeichnet mit p, k $\in$ [0, N-1].

Nach der bekannten Vorgehensweise wird die formangepaßte DCT eines Bildsegments dadurch bestimmt, daß zunächst jede Spalte des Segments gemäß der Vorschrift

$$\underline{c}_j \;=\; 2 \cdot \frac{2}{N} \cdot \underline{DCT - N} \cdot \underline{x}_j \qquad\qquad (2)$$

vertikal transformiert wird und danach die gleiche Vorschrift (2) auf die resultierenden Daten in horizontaler Richtung angewendet wird. Die Vorschrift gemäß Formel (2) ist jedoch für die Codierung von Prädiktionsfehlerbildern nicht optimal.

Somit liegt der Erfindung das Problem zugrunde, Verfahren zur Bildcodierung und zur Bilddecodierung und Anordnungen zur Bildcodierung und zur Bilddecodierung anzugeben, mit denen eine formangepaßte Transformationscodierung erreicht wird mit verbessertem Kompressionsfaktor für die Bilddaten.

Das Problem wird durch das Verfahren gemäß Patentanspruch 1, durch das Verfahren gemäß Patentanspruch 4 und durch die Anordnung gemäß Patentanspruch 9 gelöst.

Bei dem Verfahren gemäß Patentanspruch 1 zur Codierung eines digitalisierten Bildes B werden die Bildpunkte BP eines Bildobjekts BO mit einer veränderten formangepaßten Transformationscodierung codiert. Die Transformationskoeffizienten $\underline{c}_j$ der zu transformierenden Bildpunkte $\underline{x}_j$ werden nach folgender Vorschrift gebildet:

$$\underline{c}_j \;=\; \sqrt{\frac{2}{N} \cdot \underline{DCT - N}(p,k) \cdot \underline{x}_j} \qquad\qquad (3)$$

wobei mit

- N eine Größe des zu transformierenden Bildvektors bezeichnet wird, in dem die transformierten Bildpunkte enthalten sind,
- <u>DCT-N</u> eine Transformationsmatrix der Größe N x N bezeichnet wird,
- p, k Indizes bezeichnet werden mit p, k $\in$ [0, N-1].

Die "neue" formangepaßte Transformationscodierung erfolgt derart, daß die Signalenergie der Codierungsinformation der zu transformierenden Bildpunkte im Ortsbereich in etwa gleich ist mit der Signalenergie der Codierungsinformation der transformierten Bildpunkte im Frequenzbereich.

Mit anderen Worten bedeutet dies, daß die formangepaßte Transformationscodierung orthonormalisiert wird.

Vorteilhaft an dieser Vorgehensweise ist insbesondere, daß der Quantisierungsfehler bei der anschließenden Quantisierung der durch die Transformation resultierenden SpektralKoeffizienten gleichmäßig über alle Bildpunkte BP verteilt wird und der Quantisierungsfehler den gleichen mittleren Wert wie im Fall eines normalen 8x8-Bildblocks hat.

Dieses Verfahren eignet sich v.a. für die Codierung von Randbildblöcken eines Bildsegments.

Insgesamt führt das Verfahren zu einer deutlich verbesserten Codiereffizienz, d.h. bei gleicher Datenrate steigt die erzielbare Bildqualität. Wie im weiteren beschrieben wird, ist gegenüber dem bekannten Verfahren ohne zusätzlichen Rechenaufwand ein erheblich verbessertes Signal- /Rauschleistungsverhältnis von in etwa einem dB erreichbar.

Bei dem Verfahren gemäß Patentanspruch 4 wird bei der Decodierung eine inverse formangepaßte Transformationscodierung durchgeführt, wobei wiederum die Signalenergie der Codierungsinformation der zu transformierenden Bildpunkte im Ortsbereich in etwa gleich ist mit der Signalenergie der Codierungsinformation der transformierten Bildpunkte im Frequenzbereich, wobei transformierte Bildpunkte $\underline{x}_j$ aus Transformationskoeffizienten $\underline{c}_j$ nach folgender Vorschrift gebildet werden:

$$\underline{x}_j \;=\; \sqrt{\frac{2}{N} \cdot \left(\underline{DCT - N}(p,k)\right)^{-1} \cdot \underline{c}_j}$$

wobei mit

- N eine Größe des zu transformierenden Bildvektors bezeichnet wird, in dem die transformierten Bildpunkte enthalten sind,
- <u>DCT - N</u> eine Transformationsmatrix der Größe N x N bezeichnet wird,
- p, k Indizes bezeichnet werden mit p, k $\in$ [0, N-1]
- mit ()$^{-1}$ eine Inversion einer Matrix bezeichnet wird,

Dieses Verfahren weist die entsprechend oben dargestellten Vorteile für die Bildcodierung ebenfalls auf.

Bei der Anordnung gemäß Patentanspruch 9 zur Durchführung der Verfahren ist eine Transformationscodierungseinheit vorgesehen zur formangepaßten Transformationscodierung der Bildpunkte und/oder eine Transformationsdecodierungseinheit zur inversen formangepaßten Transformationscodierung. Die Transformationscodierungseinheit bzw. die Transformationsdecodierungseinheit ist derart ausgestaltet, daß die Signalenergie der Codierungsinformation der zu transformierenden Bildpunkte im Ortsbereich in etwa gleich ist mit der Signalenergie der Codierungsinformation der transformierten Bildpunkte im Frequenzbereich.

Auch für die Anordnung gelten die oben beschriebenen Vorteile der "neuen" Transformationscodierung.

Vorteilhafte Weiterbildungen der Erfindung ergeben sich aus den abhängigen Ansprüchen.

Wie in der Vorschrift (3) erkennbar ist, wird die erhebliche Verbesserung lediglich durch eine unterschiedliche Skalierung der Transformationsvorschrift gegenüber der bekannten Vorgehensweise erreicht.

Ferner ist es in einer Weiterbildung vorteilhaft, die "neue" formangepaßte Transformationscodierung lediglich in dem Inter-Bildcodierungs-Modus durchzuführen. In dem Intra-Bildcodierungs-Modus wird in dieser Weiterbildung die bekannte formangepaßte Transformationscodierung durchgeführt.

Die oben beschriebenen Weiterbildungen für das Verfahren zur Bildcodierung sind ebenso vorgesehen als Weiterbildungen für die Bilddecodierung, bei der Vorschrift zur inversen Transformationscodierung mit der entsprechend inversen Vorschrift.

Die Weiterbildungen der Verfahren sind ebenso vorteilhaft für Ausgestaltungen der Transformationscodierungseinheit der Anordnung zur Bildcodierung.

Ebenso sind die im Zusammenhang mit den Verfahren dargestellten Weiterbildungen der Transformationscodierung auch für die Anordnung zur Bilddecodierung vorgesehen, wobei jeweils die Transformationscodierungseinheit derart ausgestaltet ist, daß die entsprechenden Weiterbildungen realisiert werden.

Sowohl die Verfahren als auch die Anordnungen sind insbesondere vorteilhaft einsetzbar bei der formangepaßten Transformationscodierung für Randbildblöcke bei der objektbasierten Bildcodierung.

In den Figuren ist ein Ausführungsbeispiel der Erfindung dargestellt, welches im weiteren näher erläutert wird.

Es zeigen

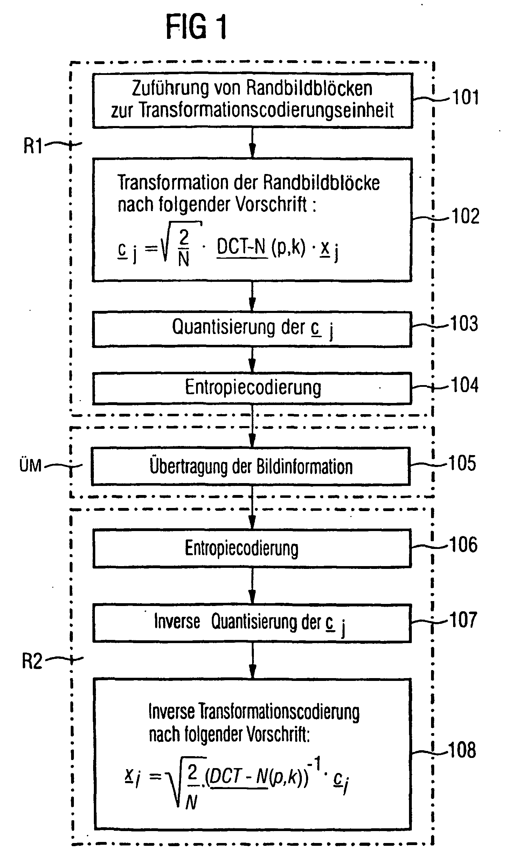

Fig. 1  ein Ablaufdiagramm, in dem die einzelnen Verfahrensschritte symbolhaft dargestellt sind;

Fig. 2  eine übliche Anordnung zur Bildcodierung mit einer Kamera, zwei Rechnern und einem Übertragungsmedium;

Fig. 3  eine Skizze einer üblichen Anordnung zur blockbasierten Bildcodierung;

Fig. 4  symbolhaft eine Darstellung eines Bildes mit einem Bildobjekt und Bildblöcken und Randbildblöcken.

Im Rahmen der objektbasierten Bildcodierung erfolgt eine Segmentierung des digitalisierten Bildes B entsprechend der in der Szene vorkommenden Bildobjekte BO und eine separate Codierung der Bildobjekte BO.

Dazu wird jedes Bildobjekt BO üblicherweise zunächst in Bildblöcke BB einer festen Größe, beispielsweise 8x8 Bildpunkte BP, zerlegt. Nach der Zerlegung befinden sich ein Teil der resultierenden Bildblöcke BB vollständig innerhalb des Bildobjekts BO. Diese Blöcke BB können in Anlehnung an die zitierten, oben erläterten Verfahren mit einer gewöhnlichen blockbasierten Transformationscodierung codiert werden.

Wie oben beschrieben, sind die Randbildblöcke RBB jedoch nur teilweise mit Bildinformationen gefüllt und müssen mit einem besonderen Verfahren codiert werden.

Bei dem Verfahren werden in dem ersten Rechner R1 vorzugsweise Randbildblöcke RBB in einem ersten Schritt 101 der Transformationscodierungseinheit DCT zugeführt. Der erste Rechner R1 ist derart ausgestaltet, daß die in Figur 3 symbolisch dargestellten Module durchgeführt werden können.

In einem zweiten Schritt 102 werden für jeden Randbildblock RBB für die Codierungsinformation der Bildpunkte BP des jeweiligen Randbildblocks RBB Transformationskoeffizienten $\underline{c}_j$ der zu transformierenden Bildpunkte $\underline{x}_j$ nach folgender Vorschrift gebildet:

$$c_j = \sqrt{\frac{2}{N}} \cdot \underline{DCT - N}(p,k) \cdot \underline{x}_j \tag{3},$$

wobei mit

- N eine Größe des zu transformierenden Bildvektors bezeichnet wird, in dem die transformierten Bildpunkte enthalten sind,
- $\underline{DCT - N}$ eine Transformationsmatrix der Größe N x N bezeichnet wird,
- p, k Indizes bezeichnet werden mit p, k $\in$ [0, N-1].

Anschaulich bedeutet die Vorschrift zur Transformationscodierung (3), daß die Signalenergie der Codierungsinformation der zu transformierenden Bildpunkte im Ortsbereich gleich ist mit der Signalenergie der Codierungsinformation der transformierten Bildpunkte im Frequenzbereich.

Als formangepaßte Transformationscodierung wird vorzugsweise die formangepaßte diskrete Cosinustransformation verwendet.

Die Vorschrift (3) wird zur Transformationscodierung vorzugsweise angewendet, wenn die Bildcodierung in dem Inter-Bildcodierungs-Modus erfolgt.

Wenn die Bildcodierung in dem Intra-Bildcodierungs-Modus erfolgt, werden vorzugsweise die Transformationskoeffizienten $\underline{c}_j$ der transformierten Bildpunkte $\underline{x}_j$ nach folgender Vorschrift gebildet:

$$\underline{c}_j = 2 \cdot \frac{2}{N} \cdot \underline{DCT - N} \cdot \underline{x}_j \qquad (2).$$

Nach Übertragung der codierten Bildinformation (Schritt 105), d.h. nach Quantisierung (Schritt 103), eventuell Entropiecodierung (Schritt 104) der übertragenen Bilddaten beispielsweise nach dem in [1] beschriebenen Verfahren, über das Übertragungsmedium ÜM wird in dem zweiten Rechner R2 eine Bilddecodierung durchgeführt.

Bei der Bilddecodierung wird in einem ersten Schritt 106 eine Entropiedecodierung und in einem zweiten Schritt 107 eine inverse Quantisierung der quantisierten Spektralkoeffizienten durchgeführt. Die Spektralkoeffizienten $\underline{c}_j$ werden ferner der inversen formangepaßten Transformationscodierung (IDCT) zugeführt. Entsprechend zum Verfahren zur Bildcodierung wird wiederum zur Bilddecodierung eine formangepaßte Transformationscodierung derart durchgeführt, daß die Signalenergie der Codierungsinformation der transformierten Bildpunkte im Frequenzbereich in etwa gleich ist mit der Signalenergie der Codierungsinformation der Bildpunkte im Ortsbereich.

Zur inversen formangepaßten Transformationscodierung werden die Bildpunkte $x_j$ aus den Spektraltransformationskoeffizienten $\underline{c}_j$ nach folgender Vorschrift gebildet (Schritt 108):

$$\underline{x}_j = \sqrt{\frac{2}{N}} \cdot \left(\underline{DCT - N}(p, k)\right)^{-1} \cdot \underline{c}_j \qquad (4),$$

wobei mit

- N eine Größe des zu transformierenden Bildvektors bezeichnet wird, in dem die transformierten Bildpunkte enthalten sind,
- $\underline{DCT - N}$ eine Transformationsmatrix der Größe N x N bezeichnet wird,
- p, k Indizes bezeichnet werden mit p, k $\in$ [0, N-1]
- mit $()^{-1}$ eine Inversion einer Matrix bezeichnet wird.

Die inverse formangepaßte Transformationscodierung gemäß Vorschrift (4) wird vorzugsweise im Rahmen der Bilddecodierung im Inter-Bilddecodierungs-Modus durchgeführt.

Im Intra-Bilddecodierungs-Modus wird vorzugsweise die formangepaßte inverse Transformationscodierung nach folgender Vorschrift durchgeführt:

$$\underline{x}_j = \frac{1}{2} \cdot \left(\underline{DCT - N}(p, k)\right)^{-1} \cdot \underline{c}_j \qquad (5).$$

Bei der Anordnung zur Bildcodierung ist eine Transformationscodierungseinheit DCT vorgesehen zur formangepaßten Transformationscodierung der Bildpunkte BP. Die Transformationscodierungeinheit DCT ist derart ausgestaltet, daß eine Signalenergie der Codierungsinformation der zu transformierenden Bildpunkte im Ortsbereich in etwa gleich sind mit der Signalenergie der Codierungsinformation der transformierten Bildpunkte im Frequenzbereich.

Die Transformationscodierungseinheit ist vorzugsweise derart ausgestaltet, daß die im Rahmen des Verfahren zur Bildcodierung dargestellten Verfahrensschritte in der Transformationscodierungseinheit DCT realisiert sind. Das Verfahren kann selbstverständlich in der Anordnung auch in Software realisiert sein, die von dem Prozessor P verarbeitet wird.

Das gleiche gilt für die Anordnung zur Bilddecodierung, die eine inverse Transformationscodierungseinheit IDCT aufweist. Entsprechend ist die inverse Transformationscodierungseinheit IDCT derart ausgestaltet, daß die Verfahrensschritte zur Bilddecodierung, insbesondere zur inversen formangepaßten Transformationscodierung realisiert ist.

Sowohl das Verfahren als auch die Anordnungen sind vorzugsweise auf Randbildblöcke RBB von Bildobjekten BO eines digitalisierten Bildes B anwendbar.

Anschaulich bedeutet das Verfahren eine veränderte Skalierung der Transformationsvorschrift, wobei die Signalenergie der Codierungsinformation der Bildpunkte im Ortsbereich gleich ist der Signalenergie der Codierungsinformation der Bildpunkte im Frequenzbereich.

Es ist für die Erfindung nicht wesentlich, in welcher Weise die transformierten Bildpunkte, d.h. die Spektralkoeffizienten im Rahmen der Bildcodierung weiter verwendet werden, d.h. die Art der Quantisierung, der Entropiecodierung bzw. der Kanalcodierung.

Im Rahmen dieses Dokuments wurden folgende Veröffentlichungen zitiert:

[1] ISO/IEC JTC1/SC29/WG11, MPEG-4 Video Verification Model Version 5.0 Doc.N1469, Nov. 1996, S. 55 - 59.

[2] T. Sikora und B. Makai, Shape Adaptive DCT for Generic Coding of Video, IEEE Transactions on Circuits and Systems for Video Technology, Vol. 5, S. 59 - 62, Feb. 1995

[3] "Image coding" , Discrete Cosine Transform, Algorithm, Advantages, Applications, Rao K R et al, 1. Januar 1990, Seiten 163-207

**Patentansprüche**

1. Verfahren zur Codierung eines digitalisierten Bildes, das Bildobjekte mit einer beliebigen Anzahl Bildpunkte aufweist, und bei dem die Bildpunkte mit einer formangepaßten Transformationscodierung codiert werden,
   **dadurch gekennzeichnet, dass**
   Transformationskoeffizienten $\underline{c}_j$ der transformierten Bildpunkte $\underline{x}_j$ nach folgender Vorschrift gebildet werden:

$$\underline{c}_j = \sqrt{\frac{2}{N}} \cdot \underline{DCT-N}(p,k) \cdot \underline{x}_j$$

   wobei mit

   - N eine Größe des zu transformierenden Bildvektors bezeichnet wird, in dem die transformierten Bildpunkte enthalten sind,
   - $\underline{DCT\text{-}N}$ eine Transformationsmatrix der Größe N x N bezeichnet wird,
   - p, k Indizes bezeichnet werden mit p, k $\in$ [0, N-1], die formangepaßte Transformationscodierung derart erfolgt, daß eine Signalenergie der zu transformierenden Bildpunkte im Ortsbereich in etwa gleich ist mit einer Signalenergie der transformierten Bildpunkte im Frequenzbereich.

2. Verfahren nach dem vorangegangenen Anspruch,

   - bei dem die Bildcodierung entweder in einem Intra-Bildcodierungsmodus oder in einem Inter-Bildcodierungsmodus erfolgt,
   - bei dem die formangepaßte Transformationscodierung nur in dem Inter-Bildcodierungsmodus durchgeführt wird, und
   - bei dem in dem Intra-Bildcodierungsmodus eine zu der formangepaßten Transformationscodierung verschiedene, zweite formangepaßte Transformationscodierung durchgeführt wird.

**3.** Verfahren nach Anspruch 2,
bei dem als zweite formangepaßte Transformationscodierung eine formangepaßte Diskrete Cosinus Transformation verwendet wird.

**4.** Verfahren zur Decodierung eines digitalisierten Bildes, das Bildobjekte mit einer beliebigen Anzahl Bildpunkte aufweist, und bei dem die Bildpunkte mit einer inversen formangepaßten Transformationscodierung decodiert werden, **dadurch gekennzeichnet, dass**
transformierte Bildpunkte $\underline{x}_j$ aus Transformationskoeffizienten $\underline{c}_j$ nach folgender Vorschrift gebildet werden:

$$\underline{x}_j = \sqrt{\frac{2}{N}} \cdot \left( DCT - N(p, k)\right)^{-1} \cdot \underline{c}_j$$

wobei mit

- N eine Größe des zu transformierenden Bildvektors bezeichnet wird, in dem die transformierten Bildpunkte enthalten sind,
- $\underline{DCT\text{-}N}$ eine Transformationsmatrix der Größe N x N bezeichnet wird,
- p, k Indizes bezeichnet werden mit p, k $\in$ [0, N-1]
- mit ()$^{-1}$ eine Inversion einer Matrix bezeichnet wird, die formangepaßte Transformationsdecodierung derart erfolgt, daß eine Signalenergie der zu transformierenden Bildpunkte im Ortsbereich in etwa gleich ist mit einer Signalenergie der transformierten Bildpunkte im Frequenzbereich.

**5.** Verfahren nach einem der vorangegangenen Ansprüche, bei dem als formangepaßte Transformationscodierung eine Variante einer formangepaßten Diskreten Cosinus Transformation verwendet wird.

**6.** Verfahren nach einem der Ansprüche 4 oder 5,

- bei dem die Bilddecodierung entweder in einem Intra-Bilddecodierungsmodus oder in einem Inter-Bilddecodierungsmodus erfolgt,
- bei dem die formangepaßte Transformationscodierung nur in dem Inter-Bilddecodierungsmodus durchgeführt wird, und
- bei dem in dem Intra-Bilddecodierungsmodus eine zu der formangepaßten Transformationscodierung verschiedene, zweite formangepaßte Transformationscodierung durchgeführt wird.

**7.** Verfahren nach Anspruch 6,
bei dem als zweite formangepaßte Transformationscodierung eine formangepaßte Diskrete Cosinus Transformation verwendet wird.

**8.** Verfahren nach einem der vorangegangenen Ansprüche,
bei dem die formangepaßte Transformationscodierung nur auf Randbildblöcke angewendet wird.

**9.** Anordnung zur Durchführung des Verfahrens nach einem der vorangegangenen Ansprüche, **dadurch gekennzeichnet, dass**
eine Transformationscodierungseinheit zur formangepaßten Transformationscodierung der Bildpunkte vorgesehen ist und/oder
eine Transformationsdecodierungseinheit zur inversen formangepaßten Transformationscodierung der Bildpunkte vorgesehen ist.

**Claims**

**1.** Method for coding a digitised image having image objects with an arbitrary number of pixels and wherein the pixels are coded by means of shape-adaptive transform coding,
**characterised in that**
transform coefficients $\underline{c}_j$ of the transformed pixels $\underline{x}_j$ are formed according to the following rule:

$$\underline{c}_j \ = \ \sqrt{\frac{2}{N}} \cdot \underline{DCT - N}(p,k) \cdot \underline{x}_j$$

where

- N designates a magnitude of the image vector that is to be transformed and in which the transformed pixels are contained,
- $\underline{DCT\text{-}N}$ designates a transform matrix of size N x N,
- p, k designate indices, where p, k $\in$ [0, N-1],

the shape-adaptive transform coding being performed in such a way that the signal energy of the pixels that are to be transformed in the spatial domain is approximately equal to the signal energy of the transformed pixels in the frequency domain.

2. Method according to the preceding claim,

- wherein the image coding is performed either in an intra-frame coding mode or in an inter-frame coding mode,
- wherein the shape-adaptive transform coding is performed only in the inter-frame coding mode, and
- wherein a second shape-adaptive transform coding scheme different from the shape-adaptive transform coding is performed in the intra-frame coding mode.

3. Method according to claim 2, wherein a shape-adaptive discrete cosine transform method is used as the second shape-adaptive transform coding scheme.

4. Method for decoding a digitised image having image objects with an arbitrary number of pixels and wherein the pixels are decoded by means of inverse shape-adaptive transform coding, **characterised in that** transformed pixels $\underline{x}_j$ are formed from transform coefficients $\underline{c}_j$ according to the following rule:

$$\underline{x}_j \ = \ \sqrt{\frac{2}{N}} \cdot (\underline{DCT - N}(p,k))^{-1} \cdot \underline{c}_j$$

where

- N designates a magnitude of the image vector that is to be transformed and in which the transformed pixels are contained,
- $\underline{DCT\text{-}N}$ designates a transform matrix of size N x N,
- p, k designate indices, where p, k $\in$ [0, N-1]
- ()$^{-1}$ designates an inversion of a matrix,

the shape-adaptive transform decoding being performed in such a way that the signal energy of the pixels that are to be transformed in the spatial domain is approximately equal to the signal energy of the transformed pixels in the frequency domain.

5. Method according to one of the preceding claims, wherein a variant of a shape-adaptive discrete cosine transform method is used as the shape-adaptive transform coding scheme.

6. Method according to one of claims 4 or 5,

- wherein the image decoding is performed either in an intra-frame coding mode or in an inter-frame coding mode,
- wherein the shape-adaptive transform coding is performed only in the inter-frame decoding mode, and
- wherein a second shape-adaptive transform coding scheme different from the shape-adaptive transform coding is performed in the intra-frame decoding mode.

7. Method according to claim 6,

wherein a shape-adaptive discrete cosine transform is used as the second shape-adaptive transform coding scheme.

8. Method according to one of the preceding claims,
   wherein the shape-adaptive transform coding is applied only to edge image blocks.

9. Arrangement for implementing the method according to one of the preceding claims, **characterised in that**
   a transform coding unit is provided for shape-adaptive transform coding of the pixels
   and/or
   a transform decoding unit is provided for inverse shape-adaptive transform coding of the pixels.

**Revendications**

1. Procédé de codage d'une image numérisée qui comporte des objets d'image avec un nombre quelconque de points d'image et dans lequel les points d'image sont codés avec un codage par transformation adapté aux formes, **caractérisé en ce que** des coefficients de transformation $\underline{c}_j$ des points d'image transformés $\underline{x}_j$ sont formés selon la règle suivante:

$$\underline{C}_j = \sqrt{\frac{2}{N}} \cdot \underline{DCT-N}(p,k) \cdot \underline{x}_j$$

   - N désignant une taille du vecteur d'image à transformer, dans lequel sont contenus les points d'image transformés,
   - $\underline{DCT\text{-}N}$ désignant une matrice de transformation de taille N x N,
   - p, k désignant des index avec p, k $\in$ [0, N-1],
   le codage par transformation adapté aux formes se faisant de manière telle qu'une énergie de signal des points d'image à transformer dans le domaine spatial est à peu près égale à une énergie de signal des points d'image transformés dans le domaine des fréquences.

2. Procédé selon la revendication précédente, dans lequel

   - le codage d'images se fait soit dans un mode de codage intra-images soit dans un mode de codage inter-images,
   - le codage par transformation adapté aux formes n'est effectué que dans le mode de codage inter-images et
   - un deuxième codage par transformation adapté aux formes, différent du codage par transformation adapté aux formes, est effectué dans le mode de codage intra-images.

3. Procédé selon la revendication 2, dans lequel est utilisée, en tant que deuxième codage par transformation adapté aux formes, une transformation cosinus discrète adaptée aux formes.

4. Procédé de décodage d'une image numérisée qui comporte des objets d'image avec un nombre quelconque de points d'image et dans lequel les points d'image sont décodés avec un codage par transformation adapté aux formes inverse, **caractérisé en ce que**
   des points d'image transformés $\underline{x}_j$ sont formés à partir des coefficients de transformation $\underline{c}_j$ selon la règle suivante:

$$\underline{x}_j = \sqrt{\frac{2}{N}} \cdot \left(\underline{DCT-N}(p,k)\right)^{-1} \cdot \underline{c}_j$$

   - N désignant une taille du vecteur d'image à transformer, dans lequel sont contenus les points d'image transformés,
   - $\underline{DCT\text{-}N}$ désignant une matrice de transformation de taille N x N,
   - p, k désignant des index avec p, k $\in$ [0, N-1],
   - $()^{-1}$ désignant une inversion d'une matrice,

le codage par transformation adapté aux formes se faisant de manière telle qu'une énergie de signal des points d'image à transformer dans le domaine spatial est à peu près égale à une énergie de signal des points d'image transformés dans le domaine des fréquences.

5. Procédé selon l'une des revendications précédentes, dans lequel est utilisée, en tant que codage par transformation adapté aux formes, une transformation cosinus discrète adaptée aux formes.

6. Procédé selon l'une des revendications 4 ou 5, dans lequel

- le décodage d'images se fait soit dans un mode de décodage intra-images soit dans un mode de décodage inter-images,
- le codage par transformation adapté aux formes n'est effectué que dans le mode de décodage inter-images et
- un deuxième codage par transformation adapté aux formes, différent du codage par transformation adapté aux formes, est effectué dans le mode de décodage intra-images.

7. Procédé selon la revendication 6, dans lequel est utilisée, en tant que deuxième codage par transformation adapté aux formes, une transformation cosinus discrète adaptée aux formes.

8. Procédé selon l'une des revendications précédentes, dans lequel le codage par transformation adapté aux formes est appliqué uniquement à des blocs d'image de bord.

9. Dispositif de mise en oeuvre du procédé selon l'une des revendications précédentes, **caractérisé en ce qu'**une unité de codage par transformation est prévue pour le codage par transformation adapté aux formes des points d'image et/ou une unité de décodage par transformation est prévue pour le codage par transformation adapté aux formes inverse des points d'image.

# FIG 1

**R1**

| | |
|---|---|
| Zuführung von Randbildblöcken zur Transformationscodierungseinheit | 101 |
| Transformation der Randbildblöcke nach folgender Vorschrift : $\underline{c}_j = \sqrt{\dfrac{2}{N}} \cdot \underline{DCT\text{-}N}(p,k) \cdot \underline{x}_j$ | 102 |
| Quantisierung der $\underline{c}_j$ | 103 |
| Entropiecodierung | 104 |

**ÜM**

| | |
|---|---|
| Übertragung der Bildinformation | 105 |

**R2**

| | |
|---|---|
| Entropiecodierung | 106 |
| Inverse Quantisierung der $\underline{c}_j$ | 107 |
| Inverse Transformationscodierung nach folgender Vorschrift: $\underline{x}_j = \sqrt{\dfrac{2}{N}} \cdot \left(\underline{DCT - N}(p,k)\right)^{-1} \cdot \underline{c}_j$ | 108 |

## FIG 2

## FIG 3

To video multiplex coder

# FIG 4